# EUROPÄISCHE PATENTSCHRIFT

(11) **EP 2 637 600 B1**
(45) Veröffentlichungstag und Bekanntmachung des Hinweises auf die Patenterteilung: **04.01.2017**
(21) Anmeldenummer: 11837279.6
(22) Anmeldetag: 28.10.2011
(51) Int. Cl.: A61C 17/22, A61C 17/34, A61C 17/20

(54) **BEHANDLUNGSGERÄT**
TREATMENT DEVICE
APPAREIL DE TRAITEMENT

(30) Priorität: 09.11.2010 DE 202010015189 U
(43) Veröffentlichungstag der Anmeldung: 18.09.2013
(73) Patentinhaber: EMAG AG, 64546 Mörfelden-Walldorf (DE)
(72) Erfinder: EMEKCI, Bülent, 64546 Mörfelden-Walldorf (DE)
(74) Vertreter: Glück Kritzenberger Patentanwälte PartGmbB
(86) Internationale Anmeldenummer: PCT/DE2011/001918
(87) Internationale Veröffentlichungsnummer: WO 2012/062277

(56) Entgegenhaltungen:
- WO-A2-2006/119376
- DE-A1-102005 009 958
- DE-U1- 20 218 605
- DE-U1-202009 003 586
- US-A- 5 546 624
- US-A1- 2010 237 720

## Beschreibung

Die Erfindung bezieht sich auf ein Behandlungsgerät.

Behandlungsgeräte, insbesondere auch solche zur Mund- und Zahnpflege sind grundsätzlich bekannt und werden vielfach auch als Ultraschall-Geräte oder Ultraschall-Zahnbehandlungsgeräte bezeichnet.

Aus der DE 20 2009 003586 U1 ist ein Ultraschallbehandlungsgerät für kosmetische Behandlungen von Hautpartien bekannt. Dieses weist einen abnehmbar an einem Gerätekörper vorgesehenen Behandlungskopf mit wenigstens einem im Behandlungskopf untergebrachten elektromechanischen Wandler.

Aus der US 5,546,624 ist eine Ultraschallzahnbürste bekannt, bei der die freien Borstenenden im Gehäuse des Bürstenkopfabschnittes der Ultraschallzahnbürste aufgenommen sind. Ferner ist im Bürstenkopfabschnitt ein elektromechanischer Wandler aufgenommen.

Ferner sind aus der DE 202 18 605 U1, der WO 2006/119376 A2 sowie der US 2010/0237720 A1 unterschiedliches Ausführungsformen einer so genannten Ultraschall-Zahnbehandlungsgeräten bekannt.

Ebenso schlägt die DE 10 2005 009 958 A1 eine mit einem Antriebssystem ausgestattete elektrische Bürste vor, die in Form einer Zahnbürste ausgebildet sein kann und die zumindest Borsten, einen Elektromagneten und eine Steuerung umfasst. Die Borsten weisen zumindest teilweise magnetische oder ferromagnetische Eigenschaften auf und können aufgrund von Magnetfeld-Wechselwirkungen durch den mittels der Steuerung steuerbaren Elektromagneten bewegt werden. Weiter wird ein Behandlungsgerät für die Behandlung von Zähnen vorgeschlagen, mit einem Behandlungskopf mit einem eine Vielzahl von Borsten aufweisenden Kopfstück und mit einem elektromechanischen Wandler im Kopfstück zur Erzeugung einer auf einen Behandlungsbereich zu übertragenden mechanischen Schwingung oder Welle, wobei die Borsten jeweils mit einem Borstenende unmittelbar mit dem wenigstens einen elektromechanischen Wandler gekoppelt sind und mit direkter Verbindung zu dem elektromechanischen Wandler in dem Kopfstück befestigt sind, und der wenigstens eine elektromechanische Wandler
zur Abgabe der mechanischen Schwingungen in einer Achsrichtung parallel oder im Wesentlichen parallel zur Längserstreckung der Borsten ausgebildet ist.

Aufgabe der Erfindung ist es, ein Behandlungsgerät aufzuzeigen, welches im oralen Bereich in besonders optimaler Weise reinigend, prophylaktisch und/oder therapeutisch wirkt und dadurch eine Mund- und/oder Zahnhygiene in einer bisher nicht erreichbaren Qualität ermöglicht. Zur Lösung dieser Aufgabe ist ein Behandlungsgerät entsprechend dem Patentanspruch 1 ausgebildet.

Nach einem grundsätzlichen Aspekt der Erfindung sind die am Kopfstück des Behandlungsgerätes vorgesehen Borsten jeweils zumindest für die mechanischen Schwingungen unmittelbar mit dem dortigen wenigstens einen elektromechanischen Wandler bzw. mit dessen die mechanischen Schwingungen abgebenden Bereich gekoppelt, sodass die Borsten für die mechanischen Schwingungen als "Wellenleiter" dienen und die mechanische Schwingungsenergie mit ihrem freien Ende möglichst unmittelbar und ungedämpft auf den jeweiligen Behandlungsbereich übertragen. Die Borsten sind dabei mit direkter Verbindung zu dem elektromechanischen Wandler im Kopfstück befestigt. Der wenigstens eine elektromechanische Wandler ist dabei so ausgeführt, dass zumindest die Hauptrichtung der von ihm erzeugten mechanischen Schwingungen parallel oder im Wesentlichen parallel zur Längserstreckung der Borsten orientiert ist, die mechanischen Schwingungen bzw. die Wellen der mechanischen Schwingungen also unmittelbar in die Borsten eingeleitet werden. Im Handstück des Behandlungsgerätes ist ein Vibrator in Form eines eine Unwucht aufweisenden Mikromotors vorgesehen, der bei eingeschaltetem Handstück oder Behandlungsgerät aktiviert ist und ausschließlich dazu dient, den aktivierten Zustand des Behandlungsgerätes mechanisch oder akustisch anzuzeigen.

Die Frequenz der mechanischen Schwingungen beträgt wenigstens 60 KHz, vorzugsweise liegt die Frequenz der mechanischen Schwingungen im Bereich zwischen 60 KHz und 2 MHz. Die elektrische Leistung, mit der der wenigstens eine
elektromechanische Wandler betrieben wird, ist bevorzugt kleiner als 50 W, sodass die von dem Behandlungskopf abgegebene Schwingungsenergie deutlich unterhalb eines Wertes liegt, der zu einer Beschädigung des Gewebes im Behandlungsbereich führen könnte.

Die im Handstück untergebrachte Elektronik zur Erzeugung der elektrischen, den wenigstens einen elektromechanischen Wandler ansteuernden Spannung ist dann beispielsweise so ausgeführt, dass bei einer einen vorgegebenen Schwellwert übersteigenden Belastung oder mechanischen Leistung am Kopfstück bzw. an den Borsten eine selbsttätige Reduzierung der den wenigstens einen elektromechanischen Wandler ansteuernden Leistung erfolgt, beispielsweise durch Überwachung und/oder Begrenzung des diesen Wandler zugeführten Stromes.

Durch die erfindungsgemäße Ausbildung wird u.a. erreicht, dass in geeigneten, bei der Behandlung verwendeten oder vorhandenen Medien (z.B. Flüssigkeiten) sich durch die von den Borsten übertragene und abgegebene Schwingungsenergie insbesondere auch im Bereich der freien Enden der Borsten kleine Kavitäten bilden, die u.a. durch Implosion Verunreinigungen und Beläge von Zähnen lösen und Keime sowie Bakterien abtöten. Die hierbei erzeugten Kavitäten besitzen einen Durchmesser, der um ein Vielfaches kleiner ist als der Durchmesser von Bakterien, sodass bei Implosion der Mikrokavitäten der Zellkern der Bakterien und damit auch die Bakterien selbst zerstört und abgetötet werden. Die von dem wenigstens einen elektromechanischen Wandler abgegebenen Wellen sind auch geeignet, in das Gewebe einzudringen und dort vorhandene Bakterien, Bakteriennester oder Keime abzutöten, und zwar mit prophylaktischer und/oder therapeutischer Wirkung. Gleichzeitig erfolgt auch eine Aktivierung einer verstärkten Durchblutung des Gewebes und eine Freisetzung körpereigener Energien und damit eine Stärkung des körpereigenen Immunsystems durch die Schwingungsenergie, sodass die Behandlung mit dem Behandlungsgerät nicht nur prophylaktisch, sondern insbesondere auch bei akuten Entzündungen, z.B. des Zahnhalteapparates oder der Zahnwurzel therapeutisch wirkt, zumal speziell auch mechanische Schwingungsenergie im Ultraschallbereich bis zu 12 mm tief in das Gewebe bzw. Zahnfleisch eindringen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

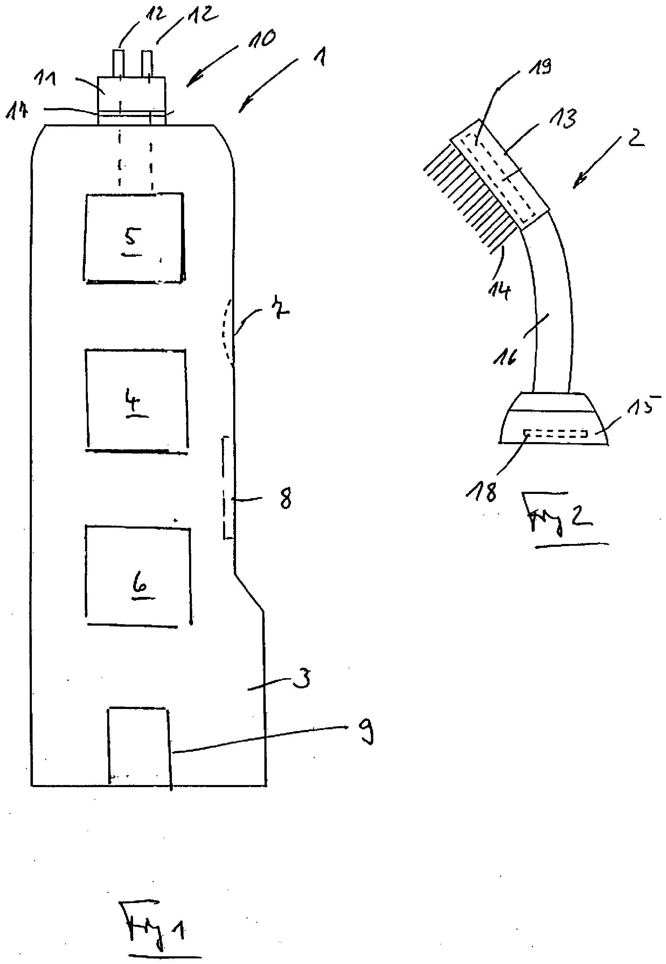

- Fig. 1: in schematischer Darstellung und in Seitenansicht das Handstück eines Behandlungsgerätes gemäß der Erfindung;
- Fig. 2: in schematischer Darstellung und in Seitenansicht den Behandlungskopf zur Verwendung bei dem Handstück der Figur 1.

Das in den Figuren allgemein mit 1 bezeichnete Handstück ist Bestandteil eines Behandlungsgerätes für die Mund- und/oder Zahnhygiene, welches zusätzlich zu dem Handstück 1 wenigstens einen Behandlungskopf 2 aufweist, der abnehmbar am Handstück befestigt ist. Das Handstück 1 ist bei der dargestellten Ausführungsform mit einem langgestreckten, beispielsweise zylinderförmigen oder in etwa zylinderförmigen Gehäuse 3 ausgeführt. In dem Handstück 1 bzw. in dem Gehäuse 3 sind verschiedene Funktionselemente des Ultraschallgerätes untergebracht, so u.a. wenigstens eine wiederaufladbare Batterie 4, eine Elektronik 5 u.a. zur Erzeugung einer Ausgangsspannung im Ultraschall- bzw. Hochfrequenz-Bereich, z.B. mit einer Frequenz größer 60 KHz, beispielsweise mit einer Frequenz im Bereich zwischen 60 KHz und 2 MHz sowie ein Vibrator 6, beispielsweise in Form eines eine Unwucht aufweisenden Miniaturmotors, der bei eingeschaltetem Handstück 1 aktiviert ist und ausschließlich dazu dient, den aktivierten Zustand des Handgerätes akustisch sowie insbesondere auch haptisch anzuzeigen.

An der Außenseite des Gehäuses 3 befinden sich als weitere Funktionselemente u.a. Betätigungselemente 7, z.B. Tasten, insbesondere zum Ein- und Ausschalten des Handstückes und/oder zur Änderung bzw. Einstellung der Intensität der Behandlung sowie Anzeigeelemente oder Displays 8, insbesondere zur Anzeige des jeweiligen Betriebszustandes und/oder zur Fehleranzeige usw. An der Unterseite ist am Handstück 1 ein Anschluss 9 zum Ankoppeln des Handstückes 1 an ein nicht dargestelltes Ladegerät vorgesehen. An der Oberseite des Gehäuses 3 ist eine Mehrfach- Kupplung 10 zum mechanischen und elektrischen Ankoppeln des Behandlungskopfes 2 vorgesehen.

Die Mehrfach- Kupplung 10 umfasst u.a. einen zapfenartigen, über die Oberseite des Gehäuses 1 weg stehenden Kupplungsabschnitt 11, der einen von der Kreisform abweichenden Querschnitt aufweist und den mechanischen Teil der Mehrfach-Kupplung 10 bildet, sowie wenigstens zwei steckerartige elektrische Anschlusselemente 12, die den elektrischen Teil der Mehrfach- Kupplung 10 bilden und mit einem Ansteuerausgang der Elektronik 5 in Verbindung steht. Das Gehäuse 3 ist beispielsweise aus Kunststoff gefertigt.

Der Behandlungskopf 2 besteht im Wesentlichen aus einem Kopfstück 13 mit einer Vielzahl von an einer Seite dieses Kopfstückes wegstehenden Borsten 14, aus einem mechanischen und elektrischen Kupplungsstück 15 und aus einem das Kopfstück 13 mit dem Kupplungsstück 15 verbindenden stabförmigen Abschnitt. Bei der dargestellten Ausführungsform sind das Kopfstück 13, das Kupplungsstück 15 und das stabförmige Zwischenstück 16 einstückig aus einem geeigneten Material, beispielsweise aus Kunststoff gefertigt. Das Kupplungsstück 15 ist haubenartig und an der dem Kopfstück 13 abgewandten Seite offen ausgeführt, sodass es passend auf den Kupplungsabschnitt 11 aufgeschoben und dort durch Verrasten befestigt werden kann. Durch den von der Kreisform abweichenden Querschnitt des Kupplungsabschnittes 11 und durch den an diesem Querschnitt angepassten Innenquerschnitt des Kupplungsstückes 15 ist der Behandlungskopf 2 nach dem Aufsetzen auf das Handstück 1 an diesem verdrehungssicher und durch Verrasten einer Gegenrast 18 an der Rast 17 gehalten. Im Inneren des Kupplungsstückes 15 sind den elektrischen Anschlüssen 12 entsprechende buchsenartige elektrische Anschlüsse vorgesehen, die über im Zwischenstück 16 aufgenommene elektrische Leitungen mit einem im Kopfstück 13 untergebrachten elektromechanischen Wandler verbunden sind, sodass nach dem Aufsetzen und Verrasten des Kupplungsstückes 15 auf der handstückseitigen Mehrfach-Kupplung 10 der elektromechanische Wandler 19 mit dem Ausgang der Elektronik verbunden ist. Der elektromechanische Wandler 19 ist beispielsweise von wenigstens einem Piezoelement gebildet, welches bei aktiviertem Handstück 1 angesteuert durch die Ausgangsspannung der Elektronik 5 eine mechanische Schwingung mit einer Frequenz größer 60 KHz, bevorzugt mit einer Frequenz im Bereich zwischen 60 KHz - 2 MHz erzeugt, und zwar mit einer bevorzugten Ausbreitungsrichtung senkrecht zur Längserstreckung des Wandlers 19, d.h. in einer Achsrichtung, die auch gleich oder im Wesentlichen gleich die Achsrichtung der Längserstreckung der Borsten 14 ist. Jede Borste 14 ist mit einem Ende unmittelbar mit dem Wandler 19 verbunden, und zwar in der Weise, dass die von dem Wandler 19 erzeugte mechanische Schwingung unmittelbar und ungedämpft auf die jeweilige Borste 14 bzw. auf deren im Kopfstück 13 gehaltenes Ende übertragen wird und jede Borste damit unmittelbar ein Element zur Übertragung und zur Abgabe der mechanischen Schwingung am anderen freien Borstenende bildet.

Die Elektronik 5 ist so ausgebildet, dass die an den wenigstens einen Wandler 18 abgegebene Leistung kleiner als 50 W ist, bevorzugt maximal 0,2 W beträgt. Hierdurch ist sichergestellt, dass die über die Borsten 14 abgegebene mechanische Schwingungsleistung auf jeden Fall unter einem Wert liegt, der bei der Behandlung zu Schädigungen des Gewebes führen könnte. Bevorzugt ist die Elektronik 5 so ausgeführt, dass bei hoher Belastung der Borsten 14 und damit des Wandlers 18 eine selbsttätige Reduzierung der von der Elektronik 5 abgegebenen elektrischen Leistung erfolgt, und zwar z.B. durch Überwachung und/oder Steuerung des dem wenigstens einen Wandler 19 zugeführten elektrischen Stromes.

Um eine optimale Behandlung des Mund- und Rachenraumes, insbesondere auch der Zähne zu ermöglichen, ist das Zwischenstück 16 gekrümmt ausgeführt, und zwar derart, dass sich die Borsten 14 an der konkaven Seite dieser Krümmung befindet.

Das aus dem Handstück 1 und dem Behandlungskopf bestehende Behandlungsgerät eignet sich in idealer Weise für die Mund- und Zahnhygiene. Insbesondere durch die unmittelbare Kopplung der Borsten 14 mit dem elektromechanischen Wandler 19 wird der Behandlung erreicht, dass sich in geeigneten Medien, beispielsweise in bei der Behandlung verwendeten flüssigen Medien durch die Schwingungen mikroskopisch kleine Kavitäten bilden, die durch Implosion Verunreinigungen, beispielsweise von Zähnen lösen und Keime, z.B. Bakterien abtöten. Weiterhin sind die mechanischen Schwingungen oder Wellen auch geeignet, in das Gewebe einzudringen und eventuell dort vorhandene Bakterien oder Bakteriennester abzutöten, was dann ebenfalls zu einer prophylaktischen und/oder therapeutischen Wirkung führt. Durch die Abtötung von Keimen oder Bakterien bei gleichzeitiger Aktivierung einer verstärkten Durchblutung des Gewebes unter Freisetzung körpereigener Energien und damit der Stärkung des körpereigenen Immunsystems durch die mechanischen Schwingungen wirkt das Behandlungsgerät auch vorbeugend und bei akuten Entzündungen, z.B. des Zahnhalteapparates oder der Zahnwurzel therapeutisch, zumal die mechanischen Schwingungen, insbesondere auch im Ultraschallbereich bis zu 12 mm tief in das Gewebe bzw. Zahnfleisch eindringen.

Eine Besonderheit des erfindungsgemäßen Behandlungsgerätes besteht darin, dass die Borsten 14 im Behandlungskopf tief und mit direkter Verbindung zu dem elektromechanischen Wandler 19 bzw. Ultraschallgenerator am Behandlungskopf 2 befestigt sind.

Eine weitere Besonderheit des Behandlungsgerätes besteht darin, dass mit der Elektronik 5 im laufenden Betrieb die einwandfreie Funktion des elektromechanischen Wandlers 19 im Kopfstück 2 überwacht und die einwandfreie oder nicht einwandfreie Funktion durch eine entsprechende Anzeige am Gehäuse 3 bzw. an der Anzeigeeinrichtung 8 angezeigt wird.

Weiterhin ist die Elektronik 5 mit einer Waren- und Überwachungsfunktion für die wiederaufladbare Batterie 4 so ausgebildet, dass bei ausreichender Batteriespannung eine entsprechende Anzeige, beispielsweise in grüner Farbe und bei unzureichender Batteriespannung eine blinkende Anzeige, beispielsweise in roter Farbe an der Anzeigeeinrichtung 8 erfolgt.

Die Erfindung wurde voranstehend an einem Ausführungsbeispiel beschrieben. Es versteht sich, dass Änderungen sowie Abwandlungen möglich sind, ohne dass dadurch der der Erfindung zugrunde liegende Erfindungsgedanke verlassen wird.

### Bezugszeichenliste

- 1: Handstück
- 2: Behandlungskopf
- 3: Gehäuse
- 4: wiederaufladbare Batterie bzw. Akkumulator
- 5: Elektronik
- 6: Vibrator
- 7: Betätigungseinrichtung
- 8: Anzeigeeinrichtung
- 9: Anschluss
- 10: elektromechanische Mehrfach-Kupplung
- 11: mechanischer Kupplungsabschnitt
- 12: elektrische Anschlüsse
- 13: Kopfstück
- 14: Borsten
- 15: Kupplungsstück
- 16: Zwischenstück
- 17: Rast
- 18: Gegenrast
- 19: elektromechanischer Wandler

## Patentansprüche

1. Behandlungsgerät für die Behandlung der Zähne, mit einem abnehmbar an einem Handstück (1) befestigbaren Behandlungskopf (2) mit einem eine Vielzahl von Borsten (14) aufweisenden Kopfstück (13) und mit einem elektromechanischen Wandler (19) im Kopfstück (13) zur Erzeugung einer auf einen Behandlungsbereich zu übertragenden mechanischen Schwingung oder Welle, wobei die Borsten (14) jeweils mit einem Borstenende unmittelbar mit dem wenigstens einen elektromechanischen Wandler (19) gekoppelt sind und mit direkter Verbindung zu dem elektromechanischen Wandler (19) in dem Kopfstück (13) befestigt sind, wobei der wenigstens eine elektromechanische Wandler (19) zur Abgabe der mechanischen Schwingung in einer Achsrichtung parallel oder im Wesentlichen parallel zur Längserstreckung der Borsten (14) ausgebildet ist, wobei im Handstück (1) ein Vibrator (6) in Form eines eine Unwucht aufweisenden Mikromotors vorgesehen ist, der bei eingeschaltetem Handstück oder Behandlungsgerät aktiviert ist und ausschließlich dazu dient, den aktivierten Zustand des Behandlungsgerätes mechanisch oder akustisch anzuzeigen.

2. Behandlungsgerät nach Anspruch 1, **dadurch gekennzeichnet, dass** der wenigstens eine elektromechanische Wandler (19) zur Abgabe einer mechanischen Schwingung mit einer Frequenz größer 60 KHz, vorzugsweise mit einer Frequenz zwischen 60 KHz und 2 MHz ausgebildet ist.

3. Behandlungsgerät nach Anspruch 1 oder 2, **gekennzeichnet durch** eine im Handstück (1) untergebrachte Elektronik (5) zur Ansteuerung des wenigstens einen elektromechanischen Wandlers (19), wobei die Elektronik (5) vorzugsweise zur Abgabe einer elektrischen Leistung an den wenigstens einen elektromechanischen Wandler (19) kleiner als 50 W ausgebildet ist.

4. Behandlungsgerät nach Anspruch 3, **dadurch gekennzeichnet, dass** die elektrische Leistung auf 0,2 W begrenzt ist.

5. Behandlungsgerät nach einem der vorhergehenden Ansprüche, **dadurch gekennzeichnet, dass** der Behandlungskopf (2) durch Verrasten wiederlösbar am Handstück (1) gehalten ist.

6. Behandlungsgerät nach Anspruch 5, **dadurch gekennzeichnet, dass** ein Gehäuse (3) des Handstücks (1) mit einer Kupplung (10) oder mit einem Kupplungsabschnitt (11) für die Befestigung des Behandlungskopfes (2) ausgebildet ist.

7. Behandlungsgerät nach Anspruch 6, **dadurch gekennzeichnet, dass** der Kupplungsabschnitt (11) von einem Abschnitt des Gehäuses gebildet ist und/oder einstückig mit dem Gehäuse (3) ausgebildet ist.

8. Behandlungsgerät nach einem der vorhergehenden Ansprüche, **dadurch gekennzeichnet, dass** das Gehäuse (3) des Behandlungsgerätes hermetisch dicht verschlossen ist, und zwar durch Verschweißung seiner Gehäuseteile.

9. Behandlungsgerät nach einem der vorhergehenden Ansprüche, dass eine im Gehäuse (3) des Behandlungsgerätes untergebrachte Elektronik mit einer Überwachungs- und Warnfunktion für die Spannung einer ebenfalls im Gehäuse untergebrachten wiederaufladbaren Batterie (4) ausgebildet ist, und dass an der Außenseite des Gehäuses wenigstens eine optische Anzeige vorgesehen ist, die von der Überwachungs- und Warnfunktion derart gesteuert wird, dass sie bei ausreichender Ladung der wiederaufladbaren Batterie ständig leuchtet und bei nicht ausreichender Ladung der Batterie blinkt, beispielsweise in Zeitabständen von 5 Sekunden.

## Claims

1. A treatment device for the treatment of teeth comprising a treatment head (2) that is removably fastened to a hand piece (1) having a head piece (13) comprising a plurality of bristles (14) and an electromechanical transducer (19) in the head piece (13) for producing a mechanical oscillation or wave to be transferred to a treatment area, wherein the bristles (14) are each directly connected with one bristle end to at least one electromechanical transducer (19) and are fastened in the head piece (13) with direct connection to the electromechanical transducer (19), wherein the at least one electromechanical transducer (19) is configured for delivering the mechanical oscillation in an axial direction parallel to or substantially parallel to the longitudinal extension of the bristles (14), wherein a vibrator (6) in the form of a micromotor comprising an imbalance is provided in the hand piece (1), which vibrator is activated when the hand piece or treatment device is switched on and serves exclusively to mechanically or audibly indicate that the treatment device is activated.

2. The treatment device according to claim 1, **characterized in that** the at least one electromechanical transducer (19) is configured for delivering a mechanical oscillation at a frequency higher than 60 kHz, preferably at a frequency between 60 kHz and 2 MHz.

3. The treatment device according to claim 1 or 2, **characterized by** an electronic circuit (5) accommodated in the hand piece (1) for controlling the at least one electromechanical transducer (19), wherein the electronic circuit (5) is preferably configured for delivering an electrical power of less than 50 W to the at least one electromechanical transducer (19).

4. The treatment device according to claim 3, **characterized in that** the electrical power is limited to 0.2 W.

5. The treatment device according to any one of the preceding claims, **characterized in that** the treatment head (2) is held removably on the hand piece (1) by locking.

6. The treatment device according to claim 5, **characterized in that** a housing (3) of the hand piece (1) is configured with a coupling (10) or with a coupling section (11) for fastening the treatment head (2).

7. The treatment device according to claim 6, **characterized in that** the coupling section (11) is formed by a section of the housing and/or is formed in one piece with the housing (3).

8. The treatment device according to any one of the preceding claims, **characterized in that** the housing (3) of the treatment device is hermetically sealed and specifically by welding the housing parts thereof.

9. The treatment device according to any one of the preceding claims, **characterized in that** an electronic circuit accommodated in the housing (3) of the treatment device is configured with a monitoring and warning function for the voltage of a rechargeable battery (4) also accommodated in the housing, and that at least one optical display is provided on the outer side of the housing, that is controlled by the monitoring and warning function in such a manner that it is continuously illuminated when the rechargeable battery is sufficiently charged and flashes when the battery is insufficiently charged, for example, at time intervals of 5 seconds.

## Revendications

1. Instrument de traitement, destiné à traiter les dents, avec une tête de traitement (2) qui se fixe de manière amovible sur un manche (1), avec une pièce de tête (13) comportant une pluralité de poils (14) et avec un convertisseur électromécanique (19) dans la pièce de tête (13), destiné à créer une oscillation ou une onde mécanique qui doit être transférée sur une zone à traiter, les poils (14) étant couplés chacun par une extrémité de poil avec l'au moins un convertisseur électromécanique (19) et étant fixés dans la pièce de tête (13) avec une connexion directe sur le convertisseur électromécanique (19) dans la pièce de tête (13), l'au moins un convertisseur électromécanique (19) étant conçu pour délivrer l'oscillation mécanique dans une direction axiale parallèlement ou sensiblement parallèlement à l'extension longitudinale des poils (14), étant prévu dans la pièce de manche (1) un vibrateur (6) sous la forme d'un micromoteur présentant un déséquilibre, qui est activé lorsque la poignée ou l'instrument de traitement est en route et qui sert exclusivement à indiquer par voie mécanique ou acoustique l'état activé de l'instrument de traitement.

2. Instrument de traitement selon la revendication 1, **caractérisé en ce que** l'au moins un convertisseur électromécanique (19) est conçu pour délivrer une oscillation mécanique avec une fréquence supérieure à 60 KHz, de préférence avec une fréquence comprise entre 60 KHz et 2 MHz.

3. Instrument de traitement selon la revendication 1 ou la revendication 2, **caractérisé par** un système électronique (5) logé dans le manche (1) pour l'excitation de l'au moins un convertisseur électromécanique (19), le système électronique (5) étant conçu de préférence pour délivrer une puissance électrique inférieure à 50 W à l'au moins un convertisseur électromécanique (19).

4. Instrument de traitement selon la revendication 3, **caractérisé en ce que** la puissance électrique est limitée à 0,2 W.

5. Instrument de traitement selon l'une quelconque des revendications précédentes, **caractérisé en ce que** la tête de traitement (2) est maintenue par enclenchement de manière amovible sur le manche (1).

6. Instrument de traitement selon la revendication 5, **caractérisé en ce qu'**un boîtier (3) du manche (1) est conçu avec un couplage (10) ou avec une partie de couplage (11) pour la fixation de la tête de traitement (2).

7. Instrument de traitement selon la revendication 6, **caractérisé en ce que** la partie de couplage (11) est formée par une partie du boîtier et/ou est conçue en monobloc avec le boîtier (3).

8. Instrument de traitement selon l'une quelconque des revendications précédentes, **caractérisé en ce que** le boîtier (3) de l'instrument de traitement est fermé de manière hermétiquement étanche, à savoir par soudage des ses pièces de boîtier.

9. Instrument de traitement selon l'une quelconque des revendications précédentes, **caractérisé en ce qu'**un système électronique logé dans le boîtier (3) de l'instrument de traitement est conçu avec une fonction de supervision et d'alerte pour la tension d'une batterie (4) rechargeable, également logée dans le boîtier et **en ce que** sur la face extérieure du boîtier, il est prévu au moins un affichage optique, qui est commandé par la fonction de supervision et d'alerte de telles sorte que si la charge de la batterie rechargeable est suffisante, il est allumé en continu et si la charge de la batterie n'est pas suffisante, il clignote, par exemple à des intervalles de temps de 5 secondes.
